# EUROPEAN PATENT APPLICATION

(11) **EP 4 445 734 A1**
(43) Date of publication of application: **16.10.2024**
(21) Application number: 24166019.0
(22) Date of filing: 25.03.2024
(51) Int. Cl.: A21B 1/42

(54) **INDUSTRIAL OVEN FOR FOOD PRODUCTS**

(30) Priority: 11.04.2023 IT 202300006954
(71) Applicant: Greenmodule S.r.l., 44123 Ferrara (IT)
(72) Inventor: CASONI, Marco, 44123 Ferrara (IT)
(74) Representative: Belloni, Giancarlo

(57) **Abstract**

The invention relates to an oven 20 for the industrial baking of food products, comprising a plurality of movable trays 22 configured for holding the food products during baking. The oven further comprises: a tower structure 24 comprising a plurality of superimposed modules 26 defining a vertical shaft 28 within it, and handling means 30 for keeping the trays horizontal and for moving them along the vertical shaft. Each module of the tower structure comprises: heating elements 32 for heating the air inside the module; at least one fan 34 for inducing air circulation within the module in accordance with a predetermined pattern; bulkheads 40 for distributing the air; and a control system for keeping the air inside the module at a predetermined temperature. Finally, along the tower structure of the oven there are: at least one module comprising two fans that draw air from the shaft and blow it in opposite directions; at least one module comprising a fan that draws air from a first direction and blows it in a second direction opposite the first; and at least one module comprising a fan that draws air from the second direction and blows it in the first direction.

## Description

### TECHNICAL FIELD

The present invention relates to an industrial oven for baking food, in particular an oven for baking and producing taralli, pretzels, biscuits and the like.

### STATE OF THE ART

In the field of industrial food preparation, it is widely known to use ovens that define a compartment inside them that can fully accommodate tray trolleys loaded with products to be baked. In addition to holding a plurality of trays stacked on top of each other, these trolleys are also adapted to undergo high-temperature thermal cycles without being damaged, particularly the wheels and other components. When baking bakery products, the temperature inside the oven is usually maintained at around 210°C.

This solution is particularly convenient because, once placed uncooked on the trays, the products can be handled collectively by moving the entire trolley and thus the trays.

Since it is not easy to distribute the heating elements of the oven in such a way as to obtain a uniform temperature inside the chamber, so-called "rotor" type ovens have become widespread. These ovens are configured in such a way that, during the entire baking step, the tray trolley is kept in rotation about its vertical axis, in order to obtain uniform baking of the products even if the distribution of the heating elements is not uniform.

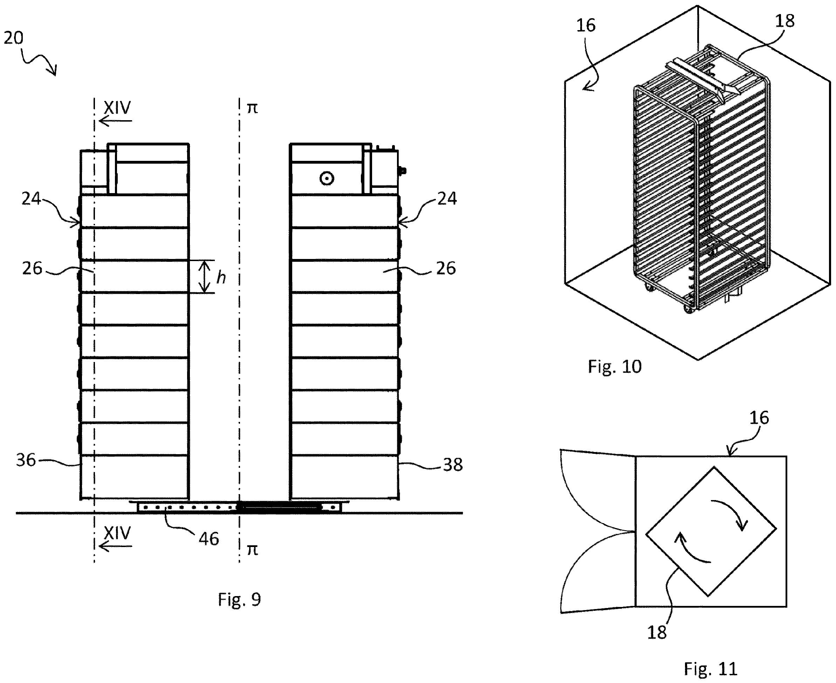

Although widely appreciated, rotor ovens are not free from disadvantages. Some of the main disadvantages will be highlighted below with particular reference to Figures 10 and 11, in which the structure of a rotor oven 16 of known type, as well as the related tray trolley 18, are schematically represented.

As a person skilled in the art can clearly understand, in order to be able to introduce the entire tray trolley 18, a door comparable in size to an entire wall of the oven 16 itself must be provided. Of course, the periodic opening of the door to move the incoming and outgoing trolleys 18 results in the dispersion of an enormous amount of heat and the consequent cooling of the oven 16 itself. Each time the door is opened, it is therefore necessary to waste a certain amount of energy to restore the correct temperature inside the oven 16.

Furthermore, as can be seen from Figure 11 in particular, in order to allow the entire trolley 18 to rotate about its vertical axis, the inner chamber of the oven 16 must have a larger floor plan than the trolley 18 itself. This leads to two different negative effects.

The first negative effect is that the heating elements are located relatively far from the trays, which requires more energy to ensure the desired temperature in the centre of the trays.

The second and main negative effect is the formation of an unavoidable stack effect (or chimney effect) in the space comprised between the walls of the oven 16 and the tray trolley 18. The stack effect, as it is known in itself, involves the upward movement of hot air, causing the temperature in the upper area of the oven 16 to rise significantly to the detriment of the lower area. For this reason, the above indicated temperature of approximately 210°C must be considered an average temperature over the height of the oven 16, measurable in an intermediate area of the compartment of the oven 16. At such an average temperature, however, it is inevitable that in the lower parts of the oven 16, much lower temperatures (around 160°C) are obtained, which do not allow food to be baked within the set time. On the contrary, in the top parts of the oven 16 the temperature can rise even considerably, up to over 230°C. As a person skilled in the art can clearly understand, in addition to being too high for the proper baking of food, such temperatures exceed the smoke point of most edible oils commonly used in food preparation. As is widely known, exceeding the smoke point of oil leads to the formation of unpleasant, harmful and potentially carcinogenic substances.

There is therefore a need for a new type of industrial oven for baking food.

### OBJECTS AND SUMMARY OF THE INVENTION

An aim of the present invention is therefore to overcome at least partially the drawbacks highlighted above in relation to the prior art.

In particular, a task of the present invention is to make available an industrial oven for baking food that allows energy consumption to be limited.

Furthermore, a task of the present invention is to make available an industrial oven for baking food that allows for as even a temperature distribution as possible within the oven.

Finally, a task of the present invention is to make available an industrial oven for baking food that allows the smoke point of commonly used oils not to be exceeded.

These and other aim and tasks of the present invention are achieved by means of an industrial oven for baking food in accordance with the appended claims. Further features are identified in the dependent claims. All appended claims form an integral part of the present disclosure.

The invention relates to an oven for the industrial baking of food products, comprising a plurality of movable trays configured for holding the food products during baking. The oven of the invention further comprises:
- a tower structure comprising a plurality of modules stacked on top of each other and defining a vertical shaft within it, and
- handling means configured for keeping each tray laid out horizontally and to move it along the vertical shaft.

Each module of the tower structure comprises:
- heating elements configured for heating the air inside the module;
- at least one fan configured for inducing air circulation within the module in accordance with a predetermined pattern; and
- a control system configured for keeping the air inside the module at a predefined temperature.

Finally, along the tower structure of the over there is:
- at least one module comprising two fans configured in such a way that, in a plan view, they draw air from the shaft and blow it in mutually opposite directions;
- at least one module comprising a fan configured in such a way that, in a plan view, it draws air from a first direction and blows it in a second direction opposite the first; and
- at least one module comprising a fan configured in such a way that, in a plan view, it draws air from the second direction and blows it in the first direction.

The structure of the oven of the invention allows for very precise control over the temperature distribution and circulation of the hot air flow over the products being baked in each module. In particular, different modules comprise differently configured fans to achieve different predetermined air circulation patterns. The oven of the invention as a whole thus enables uniform baking of the food products.

Preferably all the trays have substantially the same plan dimensions and the free cross-section of the shaft has substantially the same plan dimensions as the trays.

The fact that the shaft and the trays have substantially equal plan dimensions means that each tray defines an interruption along the shaft, so that the stack effect does not occur. The stack effect would seriously compromise the possibility of achieving effective control over temperature distribution within the oven.

Preferably, the oven further comprises an inlet, through which a horizontally arranged tray can be fed into the oven by a horizontal translation. Preferably, the oven further comprises an outlet, through which a horizontally arranged tray can be moved out of the oven by a horizontal translation.

The fact that the inlet and/or outlet are configured for accommodating the passage of horizontally arranged trays means that the height of the respective openings can be considerably limited, thus limiting unwanted heat loss from the oven to the surrounding environment.

Mutually adjacent modules preferably comprise fans configured differently to induce air circulation in accordance with different predetermined patterns.

By varying the air circulation pattern from one module to the adjacent module, particularly efficient and uniform baking of products can be achieved.

In some embodiments, the handling means include a plurality of chains running vertically along the shaft and supporting a plurality of tray support guides.

Preferably the chains are formed by a plurality of links of a predetermined length *p.* The length *p* (or pitch) represents the minimum distance that can be provided between two trays and the submultiple of the possible distances that can be provided between trays.

This structure of the handling means is particularly efficient, flexible in use and easy to implement.

In accordance with some embodiments, the oven comprises two different tower structures, flanking each other and arranged symmetrically with respect to a median plane of the oven.

The arrangement of two tower structures makes it possible to halve the overall height of the oven and to arrange the inlet and outlet at the same height.

Preferably, the oven further comprises a passage connecting the shafts of the two tower structures. More preferably, the passage connecting the shafts to each other is positioned at the upper end of the two tower structures.

The passage between the two shafts establishes continuity in the path followed by the trays along the oven.

Preferably a first tower structure comprises an inlet, positioned at the bottom, a second tower structure comprises an outlet, positioned at the bottom.

The fact that the inlet and outlet are both located at the bottom of the oven means that heat loss from inside the oven to the surrounding environment is limited.

Preferably, the two tower structures are built independently of each other and can be separated and distanced from each other.

The possibility of separating and distancing the two tower structures allows easy access to the inside of the oven for maintenance or cleaning operations.

Preferably, in modules that include two fans, the two fans are positioned at different levels along the height of the module.

Preferably, each fan comprises second bulkheads configured for defining second ducts upstream of the heating elements, wherein the second ducts are superimposed on each other in a vertical direction and are configured for removing different portions of the fan's overall flow rate.

Both of these solutions achieve an air mixing effect within the individual module. This mixing of the air helps further to make the baking of the food products even.

Further features and advantages of the present invention will be more evident from the description of the accompanying drawings.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and reference numerals illustrating structures, components, materials and/or similar elements in different drawings are indicated by similar reference numerals, where appropriate. Moreover, for clarity of illustration, certain references may not be repeated in all drawings.
Figure 1 is a side view of an oven in accordance with the invention;
Figure 2 is a front view of the oven in Figure 1;
Figure 3 is a cross-sectional view along the lines III-III in Figure 1;
Figure 4 is a cross-sectional view along the line IV-IV in Figure 1;
Figure 5 is a cross-sectional view along the line IV-IV in Figure 1;
Figure 6 is a cross-sectional view along the line VI-VI in Figure 1;
Figure 7 is a cross-sectional view along the line VII-VII in Figure 2;
Figure 8 an axonometric view of a cross-section similar to the one in Figure 7;
Figure 9 is a similar view to the one in Figure 1, in which the oven is in a maintenance configuration;
Figure 10 is a schematic axonometric view of a rotor oven of a known type containing a tray trolley inside it;
Figure 11 is a schematic plan view of a rotor oven of a known type containing a tray trolley inside it;
Figure 12 is an enlarged view of the detail indicated with XII in Figure 4;
Figure 13 is a cross-sectional view along the line XIII-XIII in Figure 12; and
Figure 14 is a cross-sectional view along the line XIV-XIV in Figure 9.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The description addresses in detail the peculiar technical aspects and features of the invention, while the aspects and technical features known per se can only be mentioned. In these respects, what is stated above with reference to the prior art remains valid.

The use of "for example", "etc.", "or" indicates non-exclusive alternatives without limitation, unless otherwise indicated. The use of "comprises" and "includes" means "comprises or includes, but not limited to", unless otherwise indicated.

The oven of the invention is intended to be used in the presence of the acceleration of gravity g. In the following discussion, it is understood that the acceleration of gravity uniquely defines the vertical direction and the horizontal directions perpendicular thereto.

Furthermore, it is understood with reference to acceleration of gravity, that the terms "above", "top", "upper" and the like are defined unambiguously, with respect to the terms "below", "bottom", "lower" and the like.

The oven of the invention comprises an inlet for trays. For simplicity's sake, the invention will be described below with reference to a hypothetical observer looking at the inlet to the oven. In light of this convention, therefore, the terms "forward", "front" and the like indicate positions relatively close to the inlet, while the terms "back", "rear" and the like indicate positions relatively far from the inlet. The terms left and right should be interpreted likewise. As a person skilled in the art can clearly understand, nothing would change if a different convention were assumed.

In the following description, reference is often made to geometric concepts (parallel, perpendicular, symmetrical, etc.) and to geometric entities (plane, axis, etc.). As a person skilled in the art can clearly understand, such expressions are not to be understood in the abstract and perfect sense of pure geometry, but they are to be interpreted in relation to the technical scope of the invention and the typical tolerances of the field.

The invention relates to an oven 20 for the industrial baking of food products, comprising a plurality of movable trays 22 configured for holding the food products during baking. The oven 20 of the invention further comprises:
- a tower structure 24 comprising a plurality of modules 26 stacked on top of each other and defining a vertical shaft 28 within it, and
- handling means 30 configured for keeping each tray 22 arranged horizontally and to move it along the vertical shaft 28.

Each module 26 of the tower structure 24 comprises:
- heating elements 32 configured for heating the air inside the module 26;
- at least one fan 34 configured for inducing air circulation inside the module 26 in accordance with a predetermined pattern;
- bulkheads 40 distributing the air inside the module 26; and
- a control system configured for keeping the air inside module 26 at a predefined temperature.

Finally, along the tower structure 24 of the oven 20 of the invention the following are located:
- at least one module 26.a comprising two fans 34 configured in such a way that, in a plan view, they draw air from the shaft 28 and blow it in opposite directions;
- at least one module 26.b comprising a fan 34 configured in such a way that, in a plan view, it draws air from a first direction (e.g. from the right) and blows it in a second direction opposite to the first one (to the left); and
- at least one module 26.c comprising a fan 34 configured in such a way that, in a plan view, it draws air from the second direction (from the left) and blows it in the first direction (to the right).

As mentioned above, the tower structure 24 is modular. Each module 26 has a height h comprised between 30 cm and 50 cm, preferably around 40 cm. In this way, the height of the oven 20, and thus the length of the baking path travelled by the trays 22, can be easily modified during design and construction by using a different number of modules 26. Each of the modules 26 stacked to form the tower structure 24 comprises its own heating elements 32, at least one fan 34 and its own air temperature control system. Preferably, each air temperature control system comprises a temperature sensor (not shown) configured for detecting the air temperature inside the module 26 and for controlling the operation of the heating elements 32 so as to maintain a predefined temperature inside the module 26.

Preferably, in the oven 20 of the invention, different modules 26 comprise fans 34 configured differently to achieve different predetermined air circulation patterns. As a person skilled in the art can see, in the embodiments shown in the accompanying figures, the fans 34 of the different modules 26 are essentially identical to each other. Notwithstanding this, reference is made in the present discussion to the different configuration of the fans 34 in the different modules 26 of the oven 20. For simplicity's sake, it is understood that the configuration of each fan 34 is also defined by the conformation of the elements surrounding the fan 34 itself and which, cooperating with it, determine the air flow. Such elements are, for example, the bulkheads 40, but also other elements that will be described later such as the pre-chamber 48 arranged between the fan 34 and the shaft 28, or the grids 50 and/ or the walls 52 arranged between the pre-chamber 48 and the shaft 28.

Preferably, the trays 22 used in the invention are removable from the oven 20 and are of the type commonly used in industrial food preparation. Advantageously, all the trays 22 used in the oven 20 have substantially the same plan dimensions; for example, the trays 22 can measure 650 mm × 530 mm or 800 mm × 800 mm in plan.

Preferably, the trays 22 used in the oven 20 have plan dimensions such that they substantially occupy the entire free section of the shaft 28. Advantageously, the free section of the shaft 28 has plan dimensions substantially equal to those of the trays 22 used in the oven 20. In other words, each tray 22, when placed horizontally in the vertical shaft 28, remains separated from the inner walls of the shaft 28 by a minimum distance, which is useful to avoid any possible interference or rubbing during the translation of the tray 22 itself by the handling means 30. The distance between the tray 22 and each of the inner walls of the shaft 28 may, for example, be less than 10 mm, preferably less than 5 mm.

During operation of the oven 20, the handling means 30 support and move a plurality of trays 22 distributed along the vertical shaft 28. Preferably the handling means 30 keep the trays 22 spaced from each other by a predefined distance. Below some more detailed observations are provided in relation to the distance between the trays 22 moving along the shaft 28.

Apart from the minimal distance separating each tray 22 from the inner walls of the shaft 28, the presence of each tray 22 represents an interruption within the shaft 28. In other words, the presence of a tray 22, and even more so the presence of a plurality of trays 22 distributed along the shaft 28, prevent the known stack effect from occurring in the shaft 28. In the oven 20 of the invention, therefore, the spontaneous upward motion of hot air is limited and confined within the individual module 26 and/or the height separating two successive trays 22 arranged along the shaft 28.

Preferably, the tower structure 24 comprises an inlet 36, through which a horizontally arranged tray 22 can enter the oven 20 by means of a horizontal translation. In this way, at the start of baking, the tray 22 enters the oven 20 and reaches the position inside the shaft 28 from which it can start moving in a vertical direction. Preferably, the inlet 36 has a limited height, configured for the passage of the tray 22 loaded with food products to be baked; advantageously, the height of the inlet 36 is less than 10 cm. In this way, by limiting the size of the inlet 36 as much as possible, heat losses from the oven 20 to the surroundings are limited at the same time.

Preferably, the tower structure 24 also comprises an outlet 38, by means of which a horizontally arranged tray 22 can be moved out of the oven 20 by means of a horizontal translation. In this way, at the end of the baking process, the tray 22 leaves the position inside the shaft 28 in which the translation in a vertical direction ends and exits the oven 20. Preferably, the outlet 38 has a limited height, configured for the passage of the tray 22 loaded with baked food products; advantageously, the height of the outlet 38 is less than 10 cm. In this way, by limiting the size of the outlet 38 as much as possible, heat losses from the oven 20 to the surroundings are limited at the same time.

Advantageously, the handling means 30 are also configured for moving the trays 22 horizontally, into the inlet 36 to the oven 20 and out of the outlet 38 of the oven 20, respectively.

As mentioned, the at least one fan 34 is configured for reproducing air circulation in accordance with a predetermined pattern inside the module 26. Preferably, each module 26 further comprises bulkheads 40 for air distribution inside the module 26. The bulkheads 40 can advantageously cooperate with the fan 34 to reproduce air circulation in accordance with a predetermined pattern within the module 26. Advantageously, all the modules 26 comprise identical bulkheads 40, which can perform their function differently depending on the configuration of the fan 34.

In particular, the bulkheads 40 are configured for defining ducts 42 with a variable cross-section. Depending on the direction of the air flow through the ducts 42, which depends on the configuration of the fan 34, the bulkheads 40 can perform a divergent or convergent function. The bulkheads 40 can perform a divergent function to distribute the air flow from a narrow to a wide passage section. Conversely, the bulkheads 40 can perform a convergent function to concentrate the air flow from a wide to a narrow passage section. Thus, while a single shape of the bulkheads 40 is common to all the modules 26, the different configuration of the fans 34 determines a different predetermined pattern for air circulation in each module 26. More specifically, only one fan 34 can be arranged in each module 26, which can be placed on the right or left of the module 26, or two fans 34 can be arranged, which can be placed on the right and left of the module 26, respectively.

Preferably, the heating elements 32 comprise arrays of electrical resistors, which are suitable for being lapped or passed through by the air flow. Advantageously, the heating elements 32 are placed along the air circulation, preferably in a narrow passage section (e.g. near the outlet 38 of the fan 34), so as to exchange heat with most of the air circulating inside the module 26.

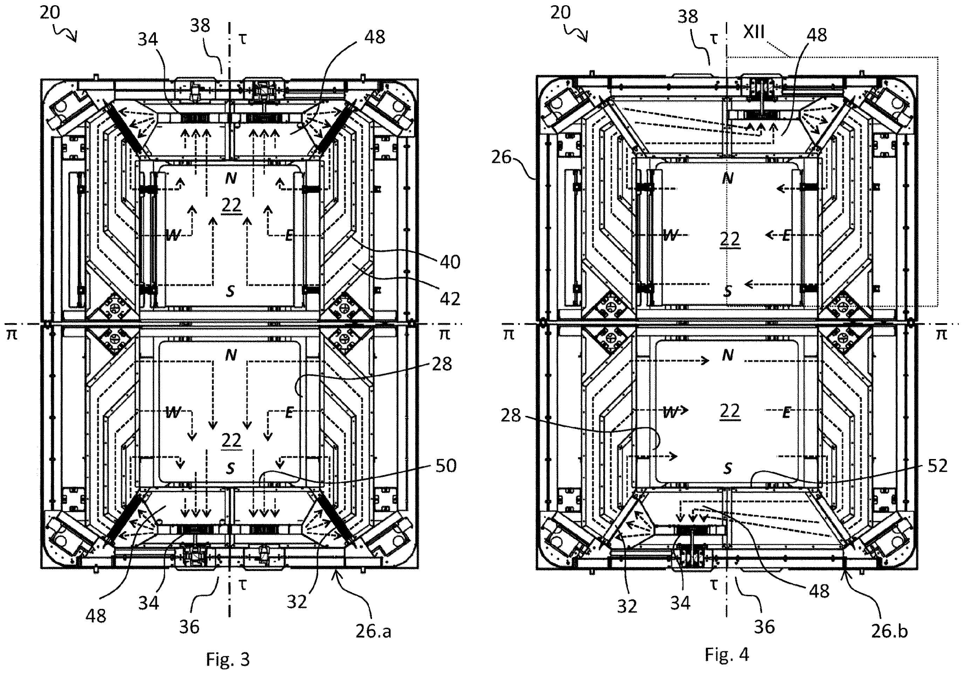

Some possible mutual arrangements of the fans 34 and the respective bulkheads 40 are described below with specific reference to Figures 3 to 5. In accordance with such embodiments, the predetermined pattern for air circulation provides for the air to hit the tray 22 inside each module 26 with a different prevailing direction. The dotted lines in Figures 3-5 schematically show the flow lines that constitute the predetermined pattern for air circulation.

Preferably in the oven 20 of the invention, adjacent modules 26 comprise fans 34 configured differently for inducing air circulations in accordance with different predetermined patterns. In other words, it is preferable that at each transition from one module 26 to the adjacent module 26, there is a change in the pattern adopted for air circulation. In this way, the individual tray 22, which is moved vertically from one module 26 to the next, is hit by air flows having different directions.

As mentioned above, along the tower structure 24 of the oven 20 there are at least the following:
- a module 26.a comprising two fans 34 configured in such a way that, in a plan view, they draw air from the shaft 28 and blow it in opposite directions;
- a module 26.b comprising a fan 34 configured in such a way that, in a plan view, it draws air from a first direction and blows it in a second direction opposite to the first one; and
- a module 26.c comprising a fan 34 configured in such a way that, in a plan view, it draws air from the second direction and blows it in the first direction.

Preferably, in the module 26.a comprising two fans 34, the two fans 34 are in direct fluid communication with the shaft 28, e.g. via grids 50. In contrast, in modules 26.b and 26.c comprising only one fan 34, a wall 52 is provided between the fan 34 and the shaft 28, and the fan 34 is in fluid communication with the shaft 28 only indirectly, through lateral channels 42.

In other words, in each module 26, the fan 34 is configured for drawing air from a pre-chamber 48 arranged between the fan 34 itself and the shaft 28, and to blow it laterally towards the bulkheads 40 that distribute it within the module 26. In the modules 26.a with two fans 34, the pre-chamber 48 comprises a grid 50 that puts it in communication with the shaft 28. In contrast, in modules 26.b and 26.c comprising only one fan 34, the pre-chamber 48 comprises a wall 52 separating it from the shaft 28 and open laterally onto the side channels 42 defined by the bulkheads 40.

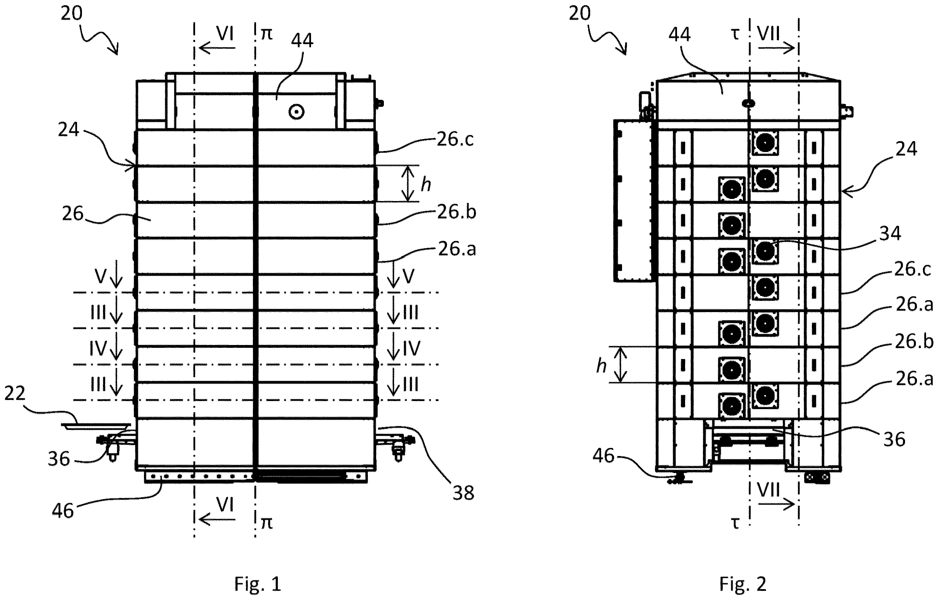

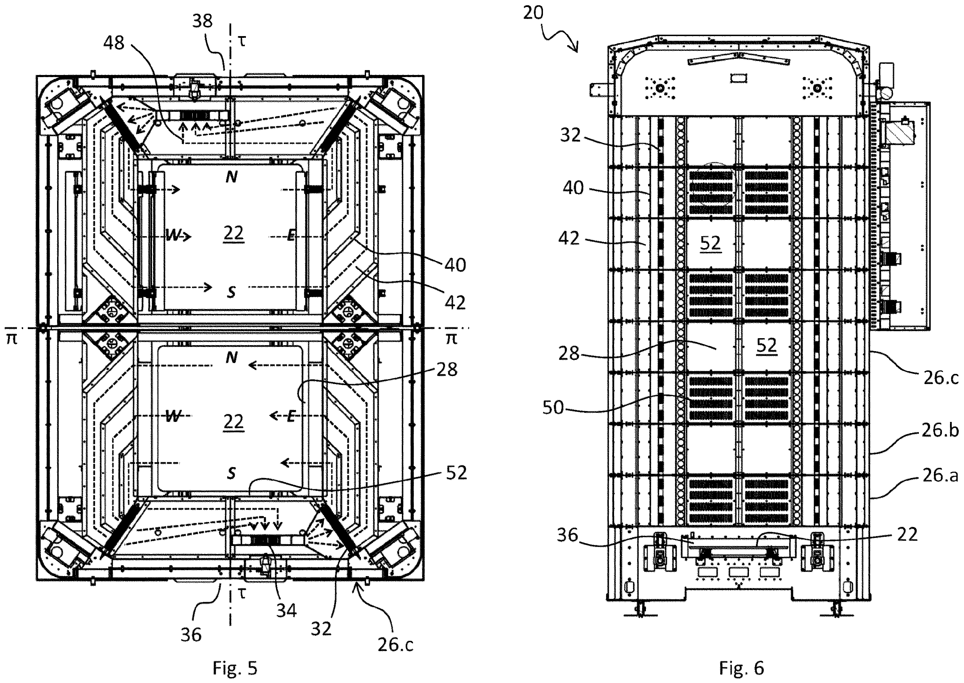

By way of example, the distribution of the modules 26 along the tower structure 24 depicted in Figures 1 to 6 can be considered. Figure 2 shows a front view of an oven 20 according to the invention, in which the arrangement of the fans 34 can be seen from the outside. Considering the modules 26 from bottom to top, it can be seen that:
- the first module 26.a (also visible in the cross-section of Figure 3) comprises two fans 34,
- the second module 26.b (also visible in the cross-section of Figure 4) comprises only the left fan 34,
- the third module 26.a comprises two fans 34 and is identical to the first module 26.a,
- the fourth module 26.c (also visible in the cross-section of Figure 5) comprises the right fan 34 only,
- the fifth module 26.a comprises two fans 34 and is identical to the first module 26.a,
- the sixth module 26.b comprises only the left fan 34 and is identical to the second module 26.b,
- the seventh module 26.a comprises two fans 34 and is identical to the first module 26.a,
- the eighth module 26.c comprises the right fan 34 only and is identical to the fourth module 26.c.

Advantageously, each module 26 comprises its own air temperature control system, preferably independent of the control systems of the other modules 26. This makes it possible to set a potentially different temperature for each of the different modules 26, so that a precise temperature profile can be imposed on the trays 22 along the baking path.

Preferably, the oven 20 comprises two different tower structures 24, arranged side by side and symmetrically with respect to a median plane of the oven 20.

In accordance with certain embodiment (such as, for example, those depicted in Figures 1 to 9), the oven 20 comprises two different tower structures 24, adjacent to each other and arranged symmetrically with respect to the transverse median plane of the oven 20, hereinafter referred to as the plane π. The plane π also represents the contact plane between the two tower structures 24. In accordance with other embodiments (not shown), the oven 20 may comprise two different tower structures 24, adjacent to each other and arranged symmetrically with respect to the longitudinal median plane of the oven 20, hereinafter referred to as the plane τ. The plane τ also represents the contact plane between the two tower structures 24.

In accordance with these embodiments, each of the two tower structures 24 comprises a plurality of modules 26 stacked on top of each other and defines a vertical shaft 28 inside it. Preferably, the oven 20 also comprises a tunnel 44 that places in communication the shafts 28 of the two tower structures 24. Preferably the tunnel 44 is positioned at one end of the tower structures 24.

Preferably, the handling means 30 are also configured for moving the trays 22 along the tunnel 44 between the shafts 28 of the two adjacent tower structures 24.

Describing the embodiment of the accompanying figures by way of example, a first tower structure 24 comprises an inlet 36 positioned at the front, at the bottom, near the base. The shaft 28 defined by the first tower structure 24 is configured for being traversed from bottom to top. The tunnel 44 that places the shafts 28 in communication with each other is located at the upper end of the two tower structures 24. In the second tower structure 24, the shaft 28 is configured for being traversed from top to bottom. Finally, the second tower structure 24 comprises an outlet 38, positioned at the rear, at the bottom, near the base.

In accordance with this embodiment, the inlet 36 and the outlet 38, in addition to having contained dimensions, are located in the lower part of the oven 20, while in the upper part there are no openings connecting the inside of the oven 20 with the outside environment. This counteracts the outlet of hot air from the oven 20 due to the well-known stack effect.

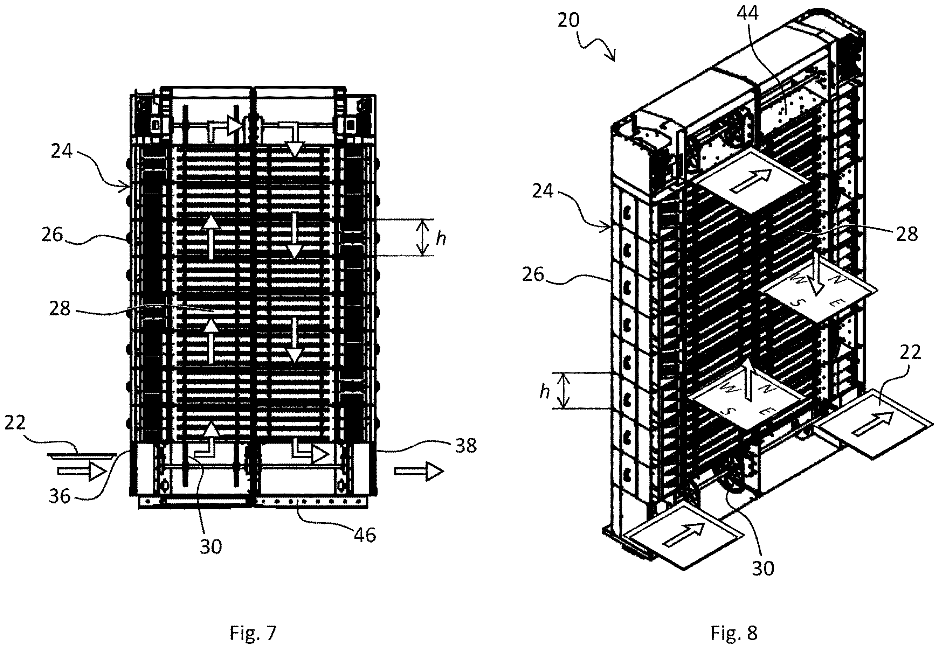

The movement imposed by the handling means 30 on the trays 22 as they pass through the oven 20 during baking is shown schematically in Figures 7 and 8; as can be seen in these figures, each tray 22:
- enters the oven 20 by translating horizontally through the inlet 36,
- reaches the first shaft 28,
- moves vertically from the bottom upwards to the top of the first shaft 28,
- passes through the tunnel 44 by translating horizontally,
- reaches the second shaft 28,
- moves vertically from the top down to the bottom of the second shaft 28,
- exits the oven 20 by translating horizontally through outlet 38.

As a person skilled in the art can clearly see, each tray 22 is kept horizontal at all times, along the whole path followed inside the oven 20. In this way, the tray 22 best supports the products being baked.

As anticipated, moving along the path described above, each tray 22 passes, one after the other, through the individual modules 26, within which the air circulation and temperature can be managed independently. This path must complete the baking of the food products arranged on the trays 22. Depending on the recipe of each specific product to be baked, a person skilled in the art will have no difficulty setting the temperatures of the individual modules 26 and the translation speed set by the handling means 30 on the trays 22, so as to achieve the desired baking.

With reference to Figures 3 to 5, some possible fan configurations 34 and the resulting predetermined patterns for air circulation inside the modules 26 are described in detail below. Each of Figures 3 to 5 shows two modules 26, side by side and in contact with each other along the transverse median plane π of the oven. The figures also show the longitudinal median plane, hereafter called the plane z; the plane τ is vertical and perpendicular to the plane π. According to the convention described above and adopted here, one module is called the front module in relation to the oven (bottom in the figures, adjacent to the tray) while the other module is called the rear module in relation to the oven (top in the figures). Again, according to the same convention, each module comprises a left and a right half, separated by the plane τ. Also shown schematically in each figure is a tray in the vicinity of the inlet 36 of the oven 20.

As a person skilled in the art can easily appreciate, in this embodiment, the two front and rear modules 26 of each figure are symmetrical to each other with respect to the centre of the oven 20, i.e. with respect to the point where the lines of the planes π and τ intersect. In accordance with other embodiments, two different modules 26 can be placed side by side without any symmetrical link.

Advantageously, the modules 26 comprise a central cavity, which opens vertically above and below the module 26, and is intended to define a section of the shaft 28. When the modules 26 are stacked on top of each other to form the tower structure 24, the different central cavities in succession form the vertical shaft 28. In each module 26, at least one fan 34 and heating elements 32 are arranged around the central cavity. Preferably the heating elements 32 are placed in the vicinity of the outlet 38 of the fan 34. In addition, bulkheads 40 for air distribution can also be arranged around the central cavity.

In this embodiment, all the modules 26 comprise identical air distribution bulkheads 40 and adopt identical locations for the heating elements 32.

The front modules 26 are described in more detail below. The bulkheads 40 are arranged along the left and right sides of each module 26, while the heating elements 32 are arranged diagonally near the ends of the front side. Each front module 26 also comprises two stations, both located along the front side, each of which is provided to accommodate a fan 34. Preferably the fans 34 are of the centrifugal type, configured for drawing air in close to its axis of rotation and for blowing it radially outwards. With reference to Figures 3 to 5, each fan 34 is configured for drawing air from a pre-chamber 48 arranged between the fan 34 itself and the shaft 28, and to blow it towards the bulkheads 40 which distribute it along the entire right side or, respectively, along the entire left side. The rear modules 26 can be described in a similar way.

In order to describe in a simple manner the different air circulation patterns obtained in the various modules 26, and in particular the prevailing directions assumed by the air with respect to the individual tray 22 in each module 26, reference is made below to the cardinal points North South West East, indicated in Figures 3-5 and 8. It should be noted in this regard that the individual tray 22, and consequently the food products that are arranged on it, simply translates through the oven 20, sometimes horizontally, sometimes vertically, but without changing its orientation.

In the detail of the front module 26.a in Figure 3, there are two fans 34, each of which draws air from the pre-chamber 48 which is directly connected to the shaft 28. In this regard, see also Figure 6, which shows the grids 50 placing in communication the pre-chamber 48 of each module 26.a with shaft 28. Each fan 34 blows air, through the heating elements 32, towards the bulkheads 40 arranged on its side. The right fan 34 blows air, through the heating elements 32, to the bulkheads 40 arranged along the right side; the left fan 34 blows air, through the heating elements 32, to the bulkheads 40 arranged along the left side. The bulkheads 40 are configured for creating diverging ducts 42 joining the location of each fan 34 with the entire side of the module 26.a. In this way, the air blown by the right fan 34 is distributed along the entire right side of the module 26.a and the air blown by the left fan 34 is distributed along the entire left side of the module 26.a. The two air flows meet, bordering onto each other, at the centre of module 26.a, where a virtual separation is defined along the plane τ. The overall effect of this configuration is that the food products arranged on tray 22, when inside the front module 26.a in Figure 3, are hit by a flow of air that has a prevailing North-South direction.

The rear module 26.a in Figure 3 is perfectly symmetrical to the front one. Therefore, considering Figure 3, a person skilled in the art will have no difficulty in understanding the structure and operation of the rear module 26.a in light of the description above for the front module 26.a. The overall effect of this configuration is that the food products arranged on the tray 22, when inside the rear module 26.a of Figure 3, are hit by an air flow that has a prevailing South-North direction.

In the detail of the front module 26.b in Figure 4, only the left fan 34 is provided, which draws air from the pre-chamber 48 which is separated from the shaft 28 but supplied by the ducts 42 on the right side. In this regard, see also Figure 6 in which the walls 52 separating the pre-chamber 48 of each module 26.b from the shaft 28 are shown. The fan 34 blows air through the heating elements 32 to the bulkheads 40 arranged on the left side. The bulkheads 40 are configured for creating diverging ducts 42 joining the location of the fan 34 with the entire left side of the module 26.b. In addition, the bulkheads 40 arranged on the right side are configured for creating converging ducts 42 joining the entire right side of the module 26.b with the pre-chamber 48. The overall effect of this configuration is that the food products placed on the tray 22, when inside the front module 26.b in Figure 4, are hit by an air flow that has a prevailing West-East direction.

The rear module 26.b in Figure 4 is perfectly symmetrical to the front module with respect to the centre of the oven 20. Therefore, considering Figure 4, a person skilled in the art will have no difficulty in understanding the structure and operation of the rear module 26.b in light of the description above for the front module 26.b. The overall effect of this configuration is that the food products arranged on the tray 22, when inside the rear module 26.b in Figure 4, are hit by an air flow that has a prevailing East-West direction.

In the detail of the front module 26.c in Figure 5, only the right fan 34 is provided, which draws air from the pre-chamber 48 which is separate from the shaft 28 but supplied by the ducts 42 on the left side. In this regard, see also Figure 6 in which the walls 52 separating the pre-chamber 48 of each module 26.c from the shaft 28 are shown. The fan 34 blows air through the heating elements 32 towards the bulkheads 40 arranged on the right side. The bulkheads 40 are configured in such a way as to create diverging ducts 42 joining the location of the fan 34 with the entire right side of the module 26.c. Furthermore, the bulkheads 40 arranged on the left side are configured for creating converging ducts 42 joining the entire left side of the module 26.c with the pre-chamber 48. The overall effect of this configuration is that the food products arranged on the tray 22, when inside the front module 26.c in Figure 5, are hit by an air flow that has a prevailing East-West direction.

The rear module 26.c in Figure 5 is perfectly symmetrical to the front module with respect to the centre of the oven 20. Therefore, considering Figure 5, a person skilled in the art will have no difficulty in understanding the structure and operation of the rear module 26.c in light of the description above for the front module 26.c. The overall effect of this configuration is that the food products arranged on the tray 22, when inside the rear module 26.c in Figure 5, are hit by an air flow that has a prevailing West-East direction.

In the light of the different configurations described above for modules 26.a, 26.b and 26.c, and in view of the alternation of these modules along the two tower structures 24 of the oven 20, it will therefore be clear how the food products arranged on a single tray 22, as they pass through oven 20, are gradually hit by air flows with different prevailing directions, such that the food products are hit from all directions.

More specifically, considering the specific structures of the accompanying Figures 1 to 8, the food products arranged on a tray 22 are successively hit by air flows having the following prevailing directions:
during the ascent along the shaft 28 of the first tower structure 24
   - North-South (module 26.a);
   - West-East (module 26.b);
   - North-South (module 26.a);
   - East-West (module 26.c);
   - North-South (module 26.a);
   - West-East (module 26.b);
   - North-South (module 26.a);
   - East-West (module 26.c);
during the descent along the shaft 28 of the second tower structure 24
   - West-East (module 26.c);
   - South-North (module 26.a);
   - East-West (module 26.b);
   - South-North (module 26.a);
   - West-East (module 26.c);
   - South-North (module 26.a);
   - East-West (module 26.b);
   - South-North (module 26.a).

As a person skilled in the art can clearly understand, the particular structure of the oven 20 allows the food products to be reached with alternating air flows from all directions, while the food products themselves remain stationary on their own tray 22, which translates without rotating.

Of course, as a person skilled in the art can clearly understand, the specific arrangement of the modules 26, i.e. the alternation between the modules 26.a, 26.b and 26.c along the path, can easily be changed to meet specific needs.

Preferably, in the modules 26.a comprising two fans 34, the two fans 34 are positioned at different heights along the height h of the module 26.a. In this way, the two air flows generated by the two fans 34 which, in a plan view, meet in the centre of the module 26.a, also achieve an air mixing effect within the individual module 26.a. This mixing of the air helps further to make the baking of the food products even.

Preferably, each fan 34 comprises second bulkheads 54 configured for defining second ducts 56 upstream of the heating elements 32, wherein the second ducts 56 are superimposed on each other in a vertical direction and are configured for removing different portions of the overall flow rate of the fan 34.

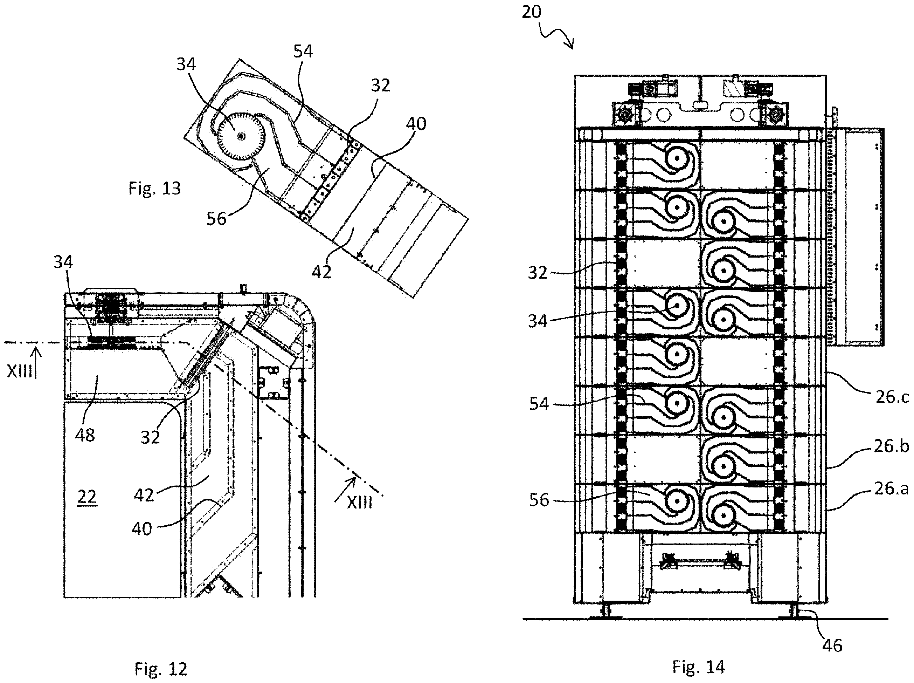

More specifically, each fan 34 preferably comprises second bulkheads 54 for air distribution inside the respective module 26. The second bulkheads 54 can advantageously cooperate with the fan 34 to reproduce air circulation in accordance with a predetermined pattern inside the module 26. With particular reference to Figures 12-14, the second bulkheads 54 are configured for defining second ducts 56.

The second bulkheads 54 take on a curved course overall to convey the air radially from the outer circumference of the centrifugal fan 34 to the heating elements 32 which have a flat configuration. The second bulkheads 54 define, for a single fan 34, second ducts 56 which take on different lengths and configurations, so that the pressure losses to which the air is subjected when travelling through them are also different. In other words, for each fan 34, each of the second ducts 56 removes a different proportion of the total flow rate of the fan 34. As a person skilled in the art can clearly understand, the flow rate is related to the pressure drop according to an inverse proportion. The second ducts 56 which have a relatively short and straight course (thus with lower pressure losses) remove a larger proportion of the total flow rate of the fan 34, while the second ducts 56 which have a relatively long and winding course (thus with higher pressure losses) remove a smaller proportion of the total flow rate of the fan 34.

As can be particularly appreciated in Figure 14, immediately upstream of the heating elements 32, the second channels 56 of a single fan 34 are superimposed on each other in a vertical direction. In contrast, downstream of the heating elements 32, the channels 42 of the same fan 34 are mutually adjacent in a horizontal direction.

The difference in flow rate between the second channels 56 results in an air flow that is uneven along the height h of each module 26. This leads to a mixing effect of the air within the individual module 26. This effect is particularly pronounced in modules 26.a which have two fans. In such modules 26.a, as can be seen in Figure 14, most of the flow rate of the right fan 34 is released in the lower area of module 26.a, while most of the flow rate of the left fan 34 is released in the upper area of the module 26.a. This results in a particularly pronounced mixing effect of the air within the individual module 26.a. As mentioned above, the mixing of the air within each module 26 helps to further standardise the baking of the food products.

In embodiments in which the oven 20 comprises two adjacent tower structures 24, these are preferably constructed independently of each other and can be separated and distanced from each other, for example for easier maintenance of the oven 20. For example, one or both tower structures 24 may rest on a trolley sliding along special rails 46. When it is necessary to carry out maintenance or internal cleaning of the oven 20, the two tower structures 24 can be disengaged from each other and removed to access the inside of the oven 20 (see Figure 9).

Preferably, the handling means 30 comprise a plurality of chains running vertically along the shaft 28 and supporting a plurality of support guides for the trays 22. Advantageously, each chain is wound onto gear wheels with a diameter equal to the plan extension of the bulkhead 40 (see Figure 8). Thus, the branch of the chain supporting the support guides for the trays 22 is arranged at the shaft 28, while the opposite branch of the chain, which closes the loop, is arranged near the outer wall of the oven 20. This arrangement prevents the return branch of the chains from interfering with other elements of the modules 26, in particular with the bulkheads 40 and ducts 42.

Preferably the support guides support the trays 22 in such a way that they are free to move horizontally, e.g. in the forward-backward direction. Each tray 22, resting on the support guides, maintains its horizontal orientation while the movement of the chains causes it to move vertically along the shaft 28.

Preferably, in a known way, the chains are formed by a plurality of links of a predefined length. The length of the individual link defines the pitch *p* which represents the minimum distance that can be provided between the trays 22 moving along the shafts 28. The pitch *p* also represents the submultiple of the possible distances that can be provided between the trays 22 moving along the shafts 28. In other words, the distances between the trays 22 can be for example 2*p*, 3*p*, 4*p* and so on.

By way of example, the handling means 30 may comprise chains, which are quite common in industry, having links of 1 inch in length, in which case the pitch *p* is 25.4 mm and the distances between the trays 22 moving along the shafts 28 may be 25.4 mm; 50.8 mm; 76.2 mm; 101.6 mm and so on.

If the oven 20 comprises two different tower structures 24 and two shafts 28, which are successively traversed by the products being baked, the distance between the trays 22 can be set differently along the two shafts 28, thus changing the density of the trays 22.

As an example, a greater distance can be set along the first shaft 28 from along the second shaft 28. Thus, the density of the trays 22 is greater in the first shaft 28 than in the second shaft 28. Along the first shaft 28, where the initial baking stages take place, heat exchange is maximum to evaporate the water in the dough of the products being baked. For this reason, it is preferable to maintain a relatively low density. Along the second shaft 28, where the final stages of baking take place, the product dough continues to dry with little energy absorption and the density of the trays 22 can be increased.

If different densities are set for the trays 22 along the two shafts 28, the handling means 30 will accordingly have to impose different speeds on the trays 22 along the two shafts 28 in order to ensure an equal flow rate, at least during operation of the oven 20 at full capacity. By way of example, if along the first shaft 28 the trays 22 are placed at a distance (e.g. 4*p*) double that of the second shaft 28 (e.g. 2p), at full capacity the handling means 30 must impose a speed along the first shaft 28 double the speed imposed along the second shaft 28.

In accordance with certain embodiments, the handling means 30 further comprise one or more translation devices, placed at the inlet 36 and/or the outlet 38 of the oven 20 and/or at the tunnel 44 placing in communication the shafts 28 of the two tower structures 24. Each translation device is configured for horizontally translating the trays 22. A conveyor device may, for example, comprise a conveyor belt on which the trays 22 can be placed; the conveyor belt is particularly suitable to be placed at the inlet 36 and outlet 38 of the oven 20. Another translation device may, for example, comprise a pusher, suitable for pushing the tray 22 in a horizontal direction while it is resting on a different structure; the pusher is particularly suitable to be placed at the tunnel 44 between the two shafts 28. According to this solution, the pusher can, for example, push the tray 22 while it is resting on the support guides.

Preferably, the tower structure 24 of the oven 20 includes insulated walls that limit heat loss from the oven 20 to the outside environment.

Thanks to the devices described above, the oven 20 of the invention allows food products to be subjected to a baking process in which temperatures are extremely even along the course and air flows are precisely controlled. This makes it possible to maintain significantly lower temperatures inside the oven 20 than with known solutions. In the oven 20 of the invention, baking takes place at temperatures comprised between 130°C and 150°C. Such temperatures, in addition to not exceeding the smoke point of oils commonly used in the preparation of food products, make it possible to significantly limit the energy expenditure for powering the oven 20.

In light of the above, a person skilled in the art can clearly understand how the invention overcomes the drawbacks highlighted in relation to the prior art.

In particular, the present invention makes available an industrial oven 20 for baking food that allows energy consumption to be limited.

In addition, the present invention makes available an industrial oven 20 for baking food products that allows for as even a temperature distribution as possible within the oven.

Finally, the present invention makes available an industrial oven 20 for baking food that allows the smoke point of commonly used oils not to be exceeded.

In conclusion, all the details can be replaced with other technically-equivalent elements; the features described in connection with a specific embodiment can also be used in other embodiments; the materials used, as well as the contingent shapes and dimensions, can be any according to the specific implementation requirements without thereby falling outside the scope of protection of the following claims.

## Claims

1. Oven (20) for the industrial baking of food products, comprising a plurality of movable trays (22), configured for holding the food products during baking, wherein the oven (20) further comprises:
- a tower structure (24) comprising a plurality of modules (26) superimposed on one other and defining a vertical shaft (28) within it, and
- handling means (30) configured for keeping each tray (22) horizontal and to move it along the vertical shaft (28),
wherein each module (26) of the tower structure (24) comprises:
- heating elements (32) configured for heating the air inside the module (26);
- at least one fan (34) configured for inducing air circulation within the module (26) in accordance with a predetermined pattern;
- bulkheads (40) for air distribution within the module (26); and
- a control system configured for keeping the air inside the module (26) at a predefined temperature
and wherein, along the tower structure (24) of the oven (20) the following are located:
- at least one module (26.a) comprising two fans (34) configured in such a way that, in a plan view, they draw air from the shaft (28) and blow it in opposite directions;
- at least one module (26.b) comprising a fan (34) configured in such a way that, in a plan view, it draws air from a first direction and blows it in a second direction opposite to the first one; and
- at least one module (26.c) comprising a fan (34) configured in such a way that, in a plan view, it draws air from the second direction and blows it in the first direction.

2. Oven (20) according to claim 1, wherein all of the trays (22) have substantially the same plan dimensions and wherein the free section of the well (28) has substantially the same plan dimensions as the trays (22).

3. Oven (20) according to claim 1 or 2, further comprising an inlet (36), by means of which a horizontally arranged tray (22) can be made to enter the oven (20) by means of a horizontal translation, and an outlet (38), by means of which a horizontally arranged baking tray (22) can be made to exit the oven (20) by means of a horizontal translation.

4. Oven (20) according to one or more of the preceding claims, wherein the bulkheads (40) cooperate with the fan (34) to reproduce within the module (26) air circulation in accordance with a predetermined pattern.

5. Oven (20) according to one or more of the preceding claims, wherein adjacent modules (26) comprise fans (34) configured differently to induce air circulation in accordance with different predetermined patterns.

6. Oven (20) according to one or more of the preceding claims, wherein the handling means (30) comprise a plurality of chains vertically traversing the shaft (28) and supporting a plurality of support guides for the trays (22).

7. Oven (20) according to the preceding claim, wherein the chains are formed by a plurality of links of a predetermined length *p* representing the minimum distance that can be provided between two trays (22) and the submultiple of the possible distances that can be provided between the trays (22).

8. Oven (20) according to one or more of the preceding claims, comprising two different tower structures (24), adjacent to each other and arranged symmetrically with respect to a median plane of the oven (20).

9. Oven (20) according to the preceding claim, further comprising a passage (44) placing the shafts (28) of the two tower structures (24) in communication with each other.

10. Oven (20) according to claim 8 or 9, wherein a first tower structure (24) comprises an inlet (36), positioned at the bottom, a second tower structure (24) comprises an outlet (38), positioned at the bottom.

11. Oven (20) according to claim 9 or 10, wherein the passage (44) placing the shafts (28) in communication with each other is positioned at the upper end of the two tower structures (24).

12. Oven (20) according to one or more of claims 8 to 11, wherein the two tower structures (24) are constructed independently of each other and can be separated and moved away from each other.

13. Oven (20) according to one or more of the preceding claims, wherein, in modules (26.a) comprising two fans (34), the two fans (34) are positioned at different levels along the height of the module (26.a).

14. Oven (20) according to one or more of the preceding claims, wherein each fan (34) comprises second bulkheads (54) configured for defining second ducts (56) upstream of the heating elements (32), wherein the second ducts (56) are superimposed on each other in a vertical direction and are configured for removing different portions of the overall flow rate of the fan (34).
